# EUROPÄISCHE PATENTANMELDUNG

(11) **EP 2 626 969 A2**
(43) Veröffentlichungstag der Anmeldung: **14.08.2013**
(21) Anmeldenummer: 13154421.5
(22) Anmeldetag: 07.02.2013
(51) Int. Cl.: H02J 3/38

(54) **Energieerzeugungsanlage mit Wechselrichter und Energiespeichersystem**

(30) Priorität: 13.02.2012 DE 102012002599
(71) Anmelder: Refusol GmbH, 72555 Metzingen (DE)
(72) Erfinder: Merz, Dr. Rainer, 71732 Tamm (DE)
(74) Vertreter: Rüger, Barthelt & Abel

(57) **Zusammenfassung**

Es ist eine Energieerzeugungsanlage (1), insbesondere für regenerative Energie, offenbart, die eine Generatoranordnung (5) mit einem Generator (3), der eine variable Gleichspannungsleistung in Abhängigkeit von Betriebs- und/oder Umgebungsbedingungen liefert, einen Wechselrichter (9), der an die Generatoranordnung (5) angeschlossen ist, um eingangsseitige Gleichspannungsleistung in ausgangsseitige Wechselspannungsleistung umzuwandeln, und ein Energiespeichersystem (8) aufweist, das eine bedarfsweise Zwischenspeicherung von Energie und Wiedergewinnung der gespeicherten Energie, um den Wechselrichter (9) zu speisen, ermöglicht. Das Energiespeichersystem (8) ist auf der Gleichspannungsseite des Wechselrichters (9) in Reihe zu der Generatoranordnung (5) und dem Wechselrichter (9) angeschlossen und weist eine Speichereinrichtung (19) auf, die in der Lage ist, langfristig Energie zu speichern. Wenigstens ein DC/DC-Wandler (17, 17') ist zur Energieniveauanpassung entweder an der Speichereinrichtung (19) und/oder dem Generator (3) angeschlossen.

## Beschreibung

Die vorliegende Erfindung betrifft eine Energieerzeugungsanlage mit einem Wechselrichter und einem Energiespeichersystem.

Energieerzeugungsanlagen, die elektrische Energie aus regenerativer Energie, bspw. von Solargeneratoren, Windkraftgeneratoren, Brennstoffzellen und dgl. erzeugen, um sie in ein Netz, bspw. ein öffentliches Versorgungsnetz, einzuspeisen oder angeschlossene Verbraucher zu versorgen, sind allgemein bekannt. Die von dem jeweiligen Generator gelieferte Energie kann dabei je nach Umgebungs- und Betriebsbedingungen, einschließlich der Tageszeit und den Wetterbedingungen, stark variieren. Z.B. hängt die von einem Photovoltaikgenerator gelieferte Leistung stark von der Sonneneinstrahlung, Temperatur etc. ab. An warmen, sonnigen Sommertagen zu Mittagszeit liefert der Generator die maximale Leistung, während unter bewölkten oder abgeschatteten Bedingungen oder am Abend bei tief stehender Sonne die Generatorleistung absinkt. In den Nachtstunden liefert ein Photovoltaikgenerator gar keine Leistung.

Die von einem Generator gelieferte Leistung kann größer sein als die Leistung, die von angeschlossenen Verbrauchern abgenommen oder in ein Netz eingespeist werden kann. Es besteht aber der Wunsch, die Energieerzeugungsanlage stets leistungsoptimiert derart zu betreiben, dass der Generator immer die nach den momentanen Verhältnisses größtmögliche Leistung abgibt. Dieser Betriebspunkt mit dem momentan größten Leistungsertrag wird als MPP-Punkt (Maximum-Power-Point) bezeichnet. Eine Reglereinrichtung, der so genannte MPP-Tracker, stellt den Betriebspunkt des Generators im Betrieb stets auf den MPP-Punkt ein.

Soll nun die Energieerzeugungsanlage leistungs- und ertragsoptimiert arbeiten, muss eine eventuell überschüssige Generatorenergie zwischenzeitlich gespeichert werden. Die gespeicherte Energie kann dann in Zeiten geringerer Energielieferung genutzt werden. Deshalb sollten in Zukunft, um eine dem jeweiligen Stromverbrauch bzw. -bedarf angepasste Bereitstellung elektrischer Energie zu ermöglichen, Photovoltaik- oder Windkraftanlagen vermehrt mit elektrischen Energiespeichersystemen ausgerüstet werden. Hierzu sind unterschiedliche Konfigurationen und Verfahren bekannt, die einen parallel zu einem Generator auf der Gleichspannungsseite oder auf der Wechselspannungsseite eines Wechselrichters angeschlossenen Energiespeicher nutzen, der bedarfsweise ge- oder entladen wird.

Bspw. ist aus der EP 1 965 483 A1 eine Zusatzeinrichtung zur Schaltung zwischen einem öffentlichen Energieversorgungsnetz und einer Eigenerzeugungsanlage, z.B. Photovoltaikanlage, bekannt, wobei an die Zusatzeinrichtung mehrere Verbraucher angeschlossen sind, die wahlweise von der Eigenerzeugungsanlage oder von dem Versorgungsnetz mit Energie versorgt werden. Ferner ist an die Zusatzeinrichtung über einen auf der Wechselspannungsseite der Anlage angeschlossenen Umrichter ein Speicher in Form einer Batterie angeschlossen. Die Batterie wird in Zeiten hoher Energielieferung geladen und in Zeiten geringerer Energielieferung durch die Eigenerzeugungsanlage genutzt, um Energie für die Verbraucher bereitzustellen.

Die an die Energieerzeugungsanlage angekoppelte Batterie als Energiespeicher ermöglicht es, bedarfsweise die Differenzenergie zwischen der durch die Erzeugungsanlage erzeugten und der verbrauchten Energie einfach auszutauschen. Durch die Ankopplung an die Wechselspannungsseite der Energieerzeugungsanlage entstehen jedoch bei überwiegender Energieerzeugung durch die Energieerzeugungsanlage relativ hohe Wandlungsverluste. Zum Laden der Batterien muss z.B. die vom Photovoltaikgenerator bereitgestellte Gleichspannungsleistung durch einen Wechselrichter in eine Wechselspannungsleistung mit zu dem Versorgungsnetz konformer Spannung, z.B. mit der Amplitude von 230 V und der Frequenz von 50 Hz, und einem hierzu passenden Wechselstrom umgewandelt werden. Anschließend wird diese Spannung durch den der Batterie zugeordneten Gleichrichter auf eine für die Batterie passende Gleichspannung von bspw. nur 12 oder 24 V, im Allgemeinen maximal 48 V, zurückgewandelt. Dies führt zu hohen Wandlungsverlusten.

Außerdem ergibt z.B ein dreiphasiges System mit einer wechselspannungsseitigen Ankopplung von Speicherbatterien ein komplexes System, das viele Einzelkomponenten aufweist und relativ kostspielig ist. Für jede Phase muss wenigstens eine Batterieeinheit mit zugehörigem Umrichter vorgehalten werden.

Aus der DE 100 18 943 A1 ist eine Photovoltaikanlage bekannt, bei der alle für ein Photovoltaikinselsystem erforderlichen Energiequellen und Energiesenken über Wandler ausschließlich an einen Gleichspannungsbus mit frei wählbarem Spannungsniveau angekoppelt sind. Ein Photovoltaikgenerator ist über einen Anpasswandler an den Gleichspannungsbus angeschlossen, an den auch eine Batterie über einen bidirektionalen Laderegler und ein Inselwechselrichter mit einem Verbraucher angeschlossen sind. Eine Steuer- und Regeleinrichtung ist für das Energiemanagement über die Auswertung des Spannungsniveaus des Gleichspannungsbusses angeschlossen.

Bei dieser Anordnung ist die Batterie auf der Gleichspannungsseite des Inselwechselrichters an dem Gleichspannungsbus parallel angeschlossen. Allerdings wird zur Schaffung des Gleichspannungsbusses zusätzlich ein Hochsetzsteller als Anpasswandler benötigt, der die Wandlungsverluste erhöht.

Außerdem ist hier, wie bei anderen aus der Praxis bekannten Lösungen mit parallel angeschlossenen Batterien zur Zwischenspeicherung der von einem Generator gelieferten Energie von Nachteil, dass mit einer niedrigen Batteriespannung gearbeitet wird. Typischerweise beträgt diese maximal 48 V und somit nur einen Bruchteil der Generatorspannung. Dies steigert Umwandlungsverluste, die durch das hohe erforderliche Maß an Tiefsetzung beim Laden als auch an Hochsetzung beim Entladen der Batterien bedingt sind.

Darüber hinaus sind die bisher vorgeschlagenen Energiespeichersysteme häufig relativ komplex und kostspielig und können Probleme bei der Regelung anderer Komponenten der Anlage nach sich ziehen. Ferner können sie oft nicht ohne weiteres mit beliebigen Anlagenkomponenten, wie Generatoren oder Wechselrichtern unterschiedlicher Bauarten, kombiniert oder in bereits bestehenden Anlagen nachgerüstet werden.

Ausgehend hiervon ist es Aufgabe der Erfindung, die vorstehend erwähnten Nachteile und Unzulänglichkeiten herkömmlicher Systeme zu überwinden und eine Energieerzeugungsanlage, insbesondere zur Nutzung regenerativer Energie, mit der Möglichkeit einer effizienten Energiespeicherung und Nutzung überschüssiger Generatorenergie zu schaffen. Insbesondere ist es eine Aufgabe der vorliegenden Erfindung, eine Energieerzeugungsanlage zu schaffen, die es ermöglicht, von einem Generator, der in Abhängigkeit von den jeweiligen Umgebungs- und/oder Betriebsbedingungen eine variable Gleichspannungsleistung liefert, bereitgestellte überschüssige Energie mit möglichst geringem Aufwand und bei hoher Effizienz, unter Vermeidung bzw. Reduktion von Umwandlungsverlusten wahlweise zu speichern und zu nutzen. Vorteilhafterweise sollte die Erfindung flexibel einsetzbar, leicht in unterschiedliche Neuanlagen integrierbar oder in bestehende Anlagen nachrüstbar sein.

Diese Aufgabe wird gemäß der vorliegenden Erfindung durch die Energieerzeugungsanlage mit den Merkmalen des Patentanspruchs 1 gelöst.

Gemäß der vorliegenden Erfindung ist eine Energieerzeugungsanlage, insbesondere für regenerative Energie, geschaffen, die eine Generatoranordnung, einen Wechselrichter und ein Energiespeichersystem aufweist. Die Generatoranordnung weist einen Generator auf, der an seinem Ausgang eine variable Gleichspannungsleistung liefert, die von den momentanen Betriebs- und/oder Umgebungsbedingungen abhängig ist. Der Wechselrichter ist an der Generatoranordnung angeschlossen und zur Umwandlung einer eingangsseitigen Gleichspannungsleistung in eine ausgangsseitige Wechselspannungsleistung eingerichtet. Die Wechselspannungsleistung kann dann zur Einspeisung in ein Netz, z.B. öffentliches Stromversorgungsnetz, oder für angeschlossene Verbraucher verwendet werden. Das Energiespeichersystem ist zur bedarfsweisen Speicherung von Energie und Wiedergewinnung der gespeicherten Energie, um den Wechselrichter zu speisen, eingerichtet. Hierzu weist das Energiespeichersystem eine Speichereinrichtung, die in der Lage ist, Energie zu speichern. Erfindungsgemäß ist das Energiespeichersystem in Reihe zu dem Generator angeschlossen, und es ist ein DC/DC-Wandler zur Energieniveauanpassung der Speichereinrichtung oder dem Generator zugeordnet.

Der Erfindung liegt das Grundkonzept zugrunde, das Energiespeichersystem auf der Gleichspannungsseite der Energieerzeugungsanlage und insbesondere in Reihe zu der Generatoranordnung und somit auch in einem gemeinsamen Stromkreis mit dem Wechselrichter in Reihe zu diesem anzuordnen, um bedarfsweise einen überschüssigen Teil der Gleichspannungs-Generatorenergie zu speichern und sie später wieder nutzbar zu machen. Diese Anordnung ermöglicht es, auf besonders einfache Weise Neuinstallationen unabhängig von der Bauart des eingesetzten Wechselrichters mit einem Energiespeichersystem auszustatten. Auch können so bereits vorhandene Energieerzeugungsanlagen leicht mit einem Energiespeichersystem ausgerüstet werden, ohne den vorhandenen Wechselrichter hardware- oder softwaremäßig umrüsten, erweitern oder ersetzen zu müssen.

Die erfindungsmäße Energieerzeugungsanlage ist insbesondere zur Nutzung regenerativer Energie vorgesehen. Die Anlage kann sowohl zum Einspeisen von Wechselstrom in ein bspw. öffentliches Netz als auch für den Inselbetrieb bestimmt sein. In einer besonders bevorzugten Anwendung ist die Anlage eine Photovoltaikanlage (PV-Anlage), die einen Photovoltaikgenerator (PV-Generator) mit einem oder mehreren miteinander verbundenen Photovoltaikmodulen aufweist. Jedenfalls kann Strom aus fluktuierend einspeisenden erneuerbaren Energien, wie z.B. der Photovoltaik-, Brennstoffzellen- oder Windenergie, bei der Anordnung des Energiespeichersystems auf der Gleichspannungsseite und in Reihenschaltung zu dem Generator verhältnismäßig aufwandsarm und verlustarm leistungsoptimiert in der Speichereinrichtung gespeichert und andererseits bei unzureichender Erzeugung aus erneuerbaren Energien ein Netz stützen oder Verbraucher versorgen. Ebenfalls könnte das Energiespeichersystem helfen, kurzzeitige Leistungs- und Frequenzschwankungen in einem Stromnetz, in das eingespeist wird, auszugleichen.

Die erforderliche Leistungssteuerung für das Laden und Entladen der Speichereinrichtung wird durch den vorgesehenen DC/DC-Wandler (auch als DC/DC-Steller oder Gleichspannungswandler bezeichnet) bewerkstelligt, der hierzu die Generatorspannung geeignet umsetzt, um den durch die Speichereinrichtung fließenden Strangstrom vorzugeben, oder direkt das für das Energiespeichersystem bereitstehende Spannungsniveau in ein für die Speichereinrichtung geeignetes Spannungsniveau umsetzt und umgekehrt. Der erfindungsgemäße DC/DC-Wandler kann zu diesem Zweck wahlweise entweder am Ausgang des Generators parallel angeschlossen sein und einen Teil der Generatoranordnung bilden, oder er kann als Teil des Energiespeichersystems an der Speichereinrichtung parallel angeschlossen sein. Es ist auch beides möglich.

Wenn angenommen wird, dass der DC/DC Wandler der Speichereinrichtung zugeordnet ist, teilt sich bspw. im Falle einer in Reihe angeschlossenen elektrischen Batterie als Energiespeicher die Generatorspannung auf den Wechselrichter und das Energiespeichersystem auf. Der von dem Generator gelieferte Strom fließt dabei sowohl durch den Wechselrichter als auch den DC/DC-Wandler der die Batterie lädt. Der DC/DC-Wandler stellt dabei über ein Übersetzungsverhältnis seiner Eingangszu seiner Ausgangsspannung, welche die fest eingeprägte Batteriespannung ist, den Anteil der Ladespannung, welche die um das Übersetzungsverhältnis des DC/DC Wanderlers modifizierte Batteriespannung ist, ein und ermöglicht das Einstellen der Ladeleistung der Batterie. Durch Umpolen der Batterie ist ein Entladen der Batterie ebenfalls möglich. Dabei wird die Ausgangsspannung des DC/DC-Wandlers zur Generatorspannung addiert und die Eingangsleistung des Wechselrichters durch die Erhöhung der Eingangsspannung vergrößert. Der DC/DC-Wandler kann dabei die Entladeleistung über seine Ausgangsleistung von Null bis zu einer maximalen Entladeleistung regeln, die nur durch die maximale Entladeleistung der Batterie oder die maximale Eingangsspannung des Wechselrichters begrenzt ist.

Es ist auch möglich, den DC/DC-Wandler an den PV-Generator anzuschließen, so dass der Ausgangsstrom des DC/DC-Wandlers den gemeinsamen Strangstrom, also den Eingangsstrom des Wechselrichters und direkt den Batteriestrom darstellt. Zur Erhöhung des Batteriestroms und somit der Lade- bzw. Entladeleistung ist der DC/DC-Wandler dann ein Tiefsetzsteller und reduziert die Ausgangsspannung des Generators um das Übersetzungsverhältnis, wodurch der Strangstrom im selben Maße erhöht wird. Zur Reduktion des Batteriestroms ist der DC/DC-Wandler ein Hochsetzsteller der die Ausgangsspannung des PV-Generators erhöht und den Strangstrom erniedrigt.

Der Wechselrichter weist vorzugsweise eine ein- bis dreiphasige elektronische Wechselrichterschaltung mit hochfrequent taktbaren Schalterelementen, wie MOS-Feldeffekttransistoren, IGBTs oder dgl., auf, die mit einem vorgegebenen Muster, bspw. pulsweitenmoduliert, angesteuert werden können, um die Wechselrichtung zu verrichten. Hierzu geeignete Wechselrichterschaltungen z.B. in Halb- oder Vollbrückenbauweise sind aus dem Stand der Technik allgemein bekannt. Der Wechselrichter arbeitet vorzugsweise transformatorlos, um hohe Wirkungsgrade zu ermöglichen, wobei aber prinzipiell beliebige Wechselrichterarten verwendbar sind.

Jedenfalls weist der Wechselrichter eine integrierte Reglereinrichtung zur Durchführung eines MPP-Tracking auf. Dabei regelt die Reglereinrichtung den Wechselrichter, um bei der momentan verfügbaren eingangsseitigen Gleichspannungsleistung des Wechselrichters stets eine maximale Einspeiseleistung zu erzielen. Z.B. stellt sich aufgrund der Reihenschaltung der Batterie zum PV-Generator eine Eingangsspannung am Wechselrichter ein, die sich von der Ausgangsspannung des PV-Generators unterscheidet Eine Untersuchung der Eingangsleistung am Wechselrichter in Abhängigkeit des Eingangstromes zeigt jedoch, dass der MPP-Tracker des Wechselrichters einen Eingangsstrom einstellen wird, der nur in sehr engen Grenzen vom optimalen Ausgangstrom des PV-Generators, dem Ausgangstrom im MPP, abweicht. Die sehr geringe Abweichung liegt im Allgemeinen innerhalb der Regeltoleranz des MPP-Trackers des Wechselrichters und ist daher vernachlässigbar klein. Sie liegt im Allgemeinen unter 1 % und kann angesichts des geringeren Aufwands und der größeren Flexibilität bei der Installation und dem Betrieb des erfindungsgemäßen Energiespeichersystems, der vereinfachten und stabileren Regelbarkeit, der reduzierten Umwandlungsverluste beim Laden und Entladen und weiterer Vorteile der Erfindung vernachlässigt werden.

Die erfindungsgemäße Speichereinrichtung ist vorzugsweise durch eine wiederaufladbare Batterieeinheit gebildet, die auch als Akkumulatoren bezeichnet werden kann. Es können elektrochemische Zellen, wie bspw. Lithium-Ionen-Akkumulatoren, Nickel-Cadmium-Akkumulatoren oder Nickel-Metallhydrid-Akkumulatoren, herkömmliche Bleiakkumulatoren und dgl. verwendet werden. Geeignete Akkumulatoren weisen eine hohe Energieaufnahmekapazität bei geringer Selbstentladung auf. Prinzipiell sind auch Speicherkondensatoren, wie bspw. sog. UltraCaps, verwendbar. Die Batterieeinheit kann aus einem oder mehreren Akkumulatoren bestehen, die vorzugsweise in Reihe miteinander verbunden sind. Alternativ oder zusätzlich können sie auch parallel miteinander verbunden sein.

Jedenfalls weist die gesamte Speichereinrichtung oder Batterieeinheit einen ersten Pol und einen entgegengesetzten zweiten Pol auf. Um sowohl ein Laden als auch ein Entladen der Speichereinrichtung oder Batterieeinheit in Reihe zu dem Generator zu ermöglichen, sind ferner Umpolmittel vorgesehen, die eingerichtet sind, um wahlweise entweder den ersten oder den zweiten Pol der Speichereinrichtung mit einem bestimmten Anschluss der Generatoranordnung und den anderen von dem ersten oder zweiten Pol mit einem Anschluss des Wechselrichters zu verbinden. So kann das Energiespeichersystem wahlweise z.B. mit gleichsinniger Polung, um die Generatorspannung zu ergänzen und eine vergrößerte Eingangsgleichspannung für den Wechselrichter bereitzustellen, oder mit umgekehrter Polung an den Generator geschaltet werden, um für einen Ladevorgang geeignet zu sein.

Wenn der DC/DC-Wandler an die Batterie angeschlossen ist, passt er im Betrieb die um die Wechselrichtereingangs- bzw. Zwischenkreisspannung reduzierte Generatorspannung, welche der Eingangsspannung des DC/DC-Wandlers entspricht, an die Batteriespannung oder umgekehrt die Batteriespannung an die "Eingangsspannung" des DC/DC-Wandlers, die beim Entladen die Ausgangsspannung darstellt, an.

Wenn der DC/DC Wandler an den Generator angeschlossen ist passt er den Ausgangsstrom des PV-Generators an den gewünschten Batteriestrom an. Ist der Strangstrom zu gering, so arbeitet er als Tiefsetzsteller. Dabei entsteht am Ausgang des DC/DC-Wandlers ein höherer Ausgangsstrom als er am Eingang vom Generator bezieht. Ist der Strangstrom zu hoch, so kann der DC/DC-Wandler als Hochsetzsteller seinen Eingangsstrom, der dem Generatorstrom entspricht, auf einen niedrigeren Wert reduzieren und die Ausgangsspannung anheben.

Der wenigstens eine DC/DC-Wandlers, wenn er an den Generator und/oder an die Batterie angeschlossen ist, kann jeweils hinsichtlich seiner Betriebsweise sowohl für das Laden als auch für das Entladen der Batterie als Hochsetzsteller oder Tiefsetzsteller arbeiten. Dabei ist zu beachten, dass die Spannung die bei der Reihenschaltung aus Batterie mit angeschlossenem DC/DC-Wandler und Generator oder bei Reihenschaltung aus Batterie und Generator mit angeschlossenem DC/DC-Wandler entsteht, innerhalb des Eingangsspannungsbereichs des verwendeten Wechselrichters bleibt.

Vorteilhafterweise weist der DC/DC-Wandler eine Tiefhochsetzsteller-Schaltungsanordnung, also einen kombinierten Hochsetzsteller, der auch als Aufwärtswandler bezeichnet wird, und Tiefsetzsteller, der auch als Abwärtswandler bezeichnet wird, mit Schaltereinheiten auf, die angesteuert werden können, um je nach Betriebsfall die Hochsetz- bzw. Tiefsetzfunktion in jeder gewünschten Wirkungsrichtung zu erfüllen. Der DC/DC-Wandler dient quasi als bidirektionaler Lade-/Entladeregler, der das Laden und Entladen der Batterieeinheit (bzw. sonstigen Speichereinrichtung) regelt. Die gleiche Schaltungsanordnung kann dann verwendet werden, um den DC/DC-Wandler, wie vorstehend erwähnt, sowohl im Lade- als auch im Entladebetrieb wahl- bzw. bedarfsweise als Hochsetzsteller oder Tiefsetzsteller arbeiten zu lassen.

Als hierfür geeignete DC/DC-Wandler sind vielfältige Schaltungsanordnungen bekannt. Es können vorzugsweise induktive Wandler verwendet werden, die zur Zwischenspeicherung der Energie eine Induktivität benutzen, die aus einer Spule oder einem Wandler-Transformator besteht. Es könnten auch kapazitive Wandler oder sonstige geeignete Wandler verwendet werden.

In einer bevorzugten Ausführungsform der Erfindung ist der DC/DC-Wandler als getakteter induktiver Spannungssteller in Vollbrückenbauweise mit taktbaren elektronischen Schalterelementen ausgeführt. Jedes Schalterelement weist eine zu ihm antiparallele Freilaufdiode auf, die modusabhängig einen Freilaufstrom übernehmen kann.

In einer vorteilhaften Realisierung weist der DC/DC-Wandler z.B. einen ersten Brückenzweig einer H- oder Vollbrücke auf, der über eine erste Verbindungsleitung mit dem Wechselrichter und über eine zweite Verbindungsleitung mit dem Generator verbunden ist und eine Reihenschaltung aus einem ersten und einem zweiten taktbaren Schalter, vorzugsweise Halbleiterschalter, jeweils mit antiparalleler Freilaufdiode aufweist. Ferner weist der DC/DC-Wandler einen zweiten Brückenzweig der H- oder Vollbrücke auf, der über eine dritte Verbindungsleitung mit dem Wechselrichter verbunden und über eine vierte Verbindungsleitung mit dem Generator verbindbar ist und eine Reihenschaltung aus einem dritten und einem vierten taktbaren Schalter, vorzugsweise Halbleiterschalter, jeweils mit antiparalleler Freilaufdiode aufweist. Eine Induktivität als Energiespeicher ist in einem Verbindungszweig angeordnet, der den Verbindungspunkt zwischen dem ersten und dem zweiten Schalter mit dem Verbindungspunkt zwischen dem dritten und dem vierten Schalter verbindet. Die Speichereinrichtung kann dann in einem Speicherzweig angeordnet sein, der parallel zu dem zweiten Brückenzweig zwischen der dritten Verbindungsleitung und der vierten Verbindungsleitung angeschlossen ist. Mit einer derartigen Schaltung des Energiespeichersystems sind alle relevanten Betriebsmodi, wie Laden oder Entladen, jeweils mit Tief- oder Hochsetzung, je nach den gegebenen Leistungen des Generators, des Wechselrichters und der Speichereinrichtung realisierbar.

Es sind vorzugsweise Mittel vorgesehen, um einen unzulässigen Entlade- oder Rückstrom von dem Energiespeichersystem zurück zu dem Wechselrichter zu vermeiden. Bei der vorerwähnten Ausführungsform der Schaltung für das Energiespeichersystem kann hierzu z.B. in der ersten Verbindungsleitung eine erste Stromrichterdiode in Durchlassrichtung von dem Wechselrichter zu dem ersten Brückenzweig angeordnet sein, während in der zweiten Verbindungsleitung eine zweite Stromrichterdiode in Durchlassrichtung von dem Wechselrichter zu einem Verbindungspunkt zwischen dem zweiten Brückenzweig und dem Speicherzweig angeordnet sein kann. Natürlich können auch andere Stromrichtermittel, Schalter oder dgl. verwendet werden.

In einer beispielhaften Realisierung der Umpolmittel zur Umkehrung der Polarität der Speichereinrichtung in Bezug auf den Generator weisen die Umpolmittel eine Koppelleitung auf, die den Wechselrichter mit einem Verbindungspunkt zwischen dem Speicherzweig und der vierten Verbindungsleitung koppelt und einen ansteuerbaren Schalter zur bedarfsweisen Unterbrechung des Stromflusses in der Koppelleitung enthält. Ferner weisen die Umpolmittel in der vierten Verbindungsleitung zwischen dem zweiten und dem vierten Schalter einen ansteuerbaren Schalter auf, der eine leitende Verbindung zwischen diesen wahlweise herstellen oder öffnen kann.

Außerdem kann in dem Speicherzweig der Speichereinrichtung ein Unterbrecher vorgesehen sein, um einen Pol der Speichereinrichtung wahlweise von der vierten Verbindungsleitung trennen zu können. Dies kann auch für Wartungszwecke oder bspw. dann nützlich sein, wenn Speichereinrichtungen unterschiedlicher Generatorstränge miteinander gekoppelt werden sollen.

In einer Weiterbildung sind ferner Leitungs- und Schaltermittel vorgesehen, die es ermöglichen, den DC/DC-Wandler, der der Speichereinrichtung zugeordnet ist, wahlweise parallel an den Generator anzuschließen. Die Mittel können es ferner ermöglichen, das Energiespeichersystem, also den DC/DC-Wandler mit der diesem zugeordneten Speichereinrichtung, wahlweise auch parallel an den Generator bzw. Wechselrichter anzuschließen. Dies kann bspw. in den Nachtstunden vorteilhaft sein, wenn der Photovoltaikgenerator keine Leistung liefert. Eine derartige Speichereinrichtung kann höchst flexibel je nach Bedarf in Reihen- oder Parallelschaltung zu dem Generator und dem Wechselrichter unter Hoch- oder Tiefsetzung ihrer Spannung geladen oder entladen werden.

Es ist ferner eine Steuereinrichtung vorgesehen, die zur Steuerung des Betriebs des oder der DC/DC-Wandler und der Speichereinrichtung, einschließlich der dieser zugeordneten Umpolmittel, in Abhängigkeit von der durch den Generator gelieferten Gleichspannungsleistung und der momentanen Leistung der Speichereinrichtung eingerichtet ist. Die Steuereinrichtung ist für das Energiemanagement mit geeigneten Sensormitteln gekoppelt, die die Spannungsniveaus sowie bedarfsweise auch den Strom des Generators und/oder der Generatoranordnung und der Speichereinrichtung erfassen. Die Steuereinrichtung kann auch weitere Funktionalitäten, wie die wahlweise parallele Ankopplung des Energiespeichersystems, steuern. Die Steuereinrichtung kann von der Steuerung für den Wechselrichter unabhängig und gesondert ausgeführt sein, um unterschiedliche Kombinationen zu ermöglichen. Beide Steuerungen können auch integriert realisiert sein.

Durch die Erfindung ist es möglich, elektrische Energie sehr effizient und flexibel zu speichern. Es ergeben sich vielfältige Anwendungsmöglichkeiten, zu denen z.B. die Eigenverbrauchsoptimierung, Insel-/Backuplösungen, Netzdienstleistungen für Energieversorgungsunternehmen, wie bspw. Bereitstellung der Regelenergie oder Kappung von Lastspitzen, etc. gehören. Mit der Erfindung können diese Anwendungen leicht und mit geringem technischen Aufwand realisiert werden. Die erfindungsgemäße Speicherlösung ermöglicht einen flexiblen Einsatz in Verbindung mit unterschiedlichen Wechselrichterbauarten. Sie lässt sich in bereits bestehenden Systemen leicht nachrüsten. Durch eine passende Wahl der Betriebsmodi je nach den gegebenen Betriebsbedingungen können optimierte Einsätze der Energieerzeugungsanlage mit hohen Wirkungsgraden ermöglicht werden.

Weitere Einzelheiten vorteilhafter Ausführungsformen der Erfindung sind Gegenstand der Zeichnung, der Beschreibung und der Patentansprüche. In der Zeichnung sind Ausführungsformen der Erfindung veranschaulicht, wobei die Zeichnung lediglich der Veranschaulichung der Prinzipien der Erfindung dient und diese in keiner Weise beschränkt. Gleiche Bezugszeichen in der Zeichnung werden verwendet, um gleiche oder ähnliche Teile zu bezeichnen. In der Zeichnung zeigen:
Fig. 1 ein stark vereinfachtes Blockschaltbild einer Energieerzeugungsanlage mit einem Wechselrichter und einem Energiespeichersystem gemäß einer ersten Ausführungsform der Erfindung;
Fig. 2a und 2b Ersatzschaltbilder der Energieerzeugungsanlage nach Fig. 1 für den Lade- bzw. Entladevorgang, in stark vereinfachten Darstellungen;
Fig. 3a ein Schaubild, das die Leistungsverteilung an den Komponenten der Energieerzeugungsanlage nach Fig. 1 gegenüber dem Strangstrom veranschaulicht;
Fig. 3b ein Schaubild, das beispielhafte Strom- und Leistungskennlinien als Funktion der Zeit für die Energieerzeugungseinrichtung nach Fig. 1 veranschaulicht;
Fig. 4 eine vereinfachte Darstellung der Energieerzeugungseinrichtung nach Fig. 1 mit einer beispielhaften Schaltungsanordnung eines Energiespeichersystems gemäß einer Ausführungsform der Erfindung, und
Fig. 5 und 6 Ersatzschaltungen von Energieerzeugungsanlage gemäß modifizierten Ausführungsformen der Erfindung nach Fig. 1 mit alternativ oder zusätzlich an den Generator der Anlage angeschlossenem DC/DC-Wandler, in stark schematisierten Prinzipdarstellungen.

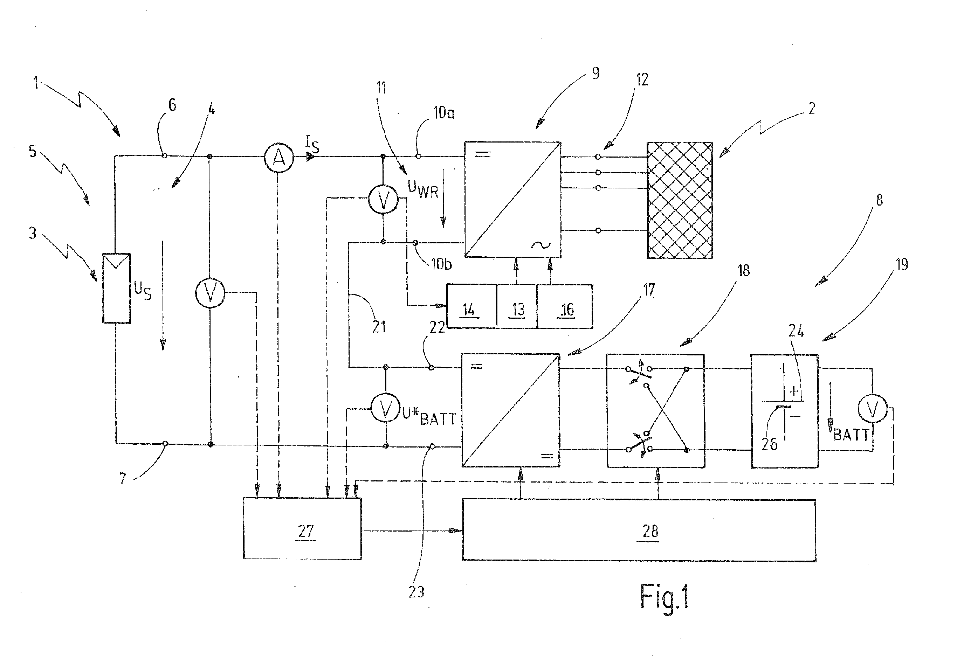

In Fig. 1 ist eine Energieerzeugungsanlage 1 zur Nutzung regenerativer Energie, um daraus elektrische Energie zu erzeugen, veranschaulicht. Die Energieerzeugungsanlage 1 ist hier insbesondere eine Photovoltaikanlage, die Solarenergie in elektrische Wechselstromenergie umwandelt, die dann entweder in ein Netz 2, insbesondere ein öffentliches Versorgungsnetz, eingespeist oder zur Versorgung lokaler Verbraucher verwendet wird. Es versteht sich jedoch, dass die Energieerzeugungsanlage auch eine Windkraftanlage, eine Wasserkraftanlage, eine auf Brennstoffzellen basierende Anlage oder eine sonstige geeignete Anlage sein kann, die Strom vorzugsweise aus erneuerbaren Energien erzeugt.

Die Energieerzeugungsanlage 1 weist einen Generator 3 auf, der in Abhängigkeit von Umgebungs- und/oder Betriebsbedingungen eine variable Gleichspannungsleistung an seinem Ausgang 4 liefert. In der dargestellten beispielhaften Ausführungsform ist der Generator 3 ein Photovoltaikgenerator (PV-Generator), der Solarenergie in elektrische Energie umwandelt, deren Größe von der Sonneneinstrahlung, abhängig von der Bewölkung, Abschattung, Jahreszeit, Tageszeit, Temperatur und sonstigen Umgebungsfaktoren und dem jeweiligen Betriebszustand variiert. Der Photovoltaikgenerator kann durch einen oder mehrere, vorzugsweise in Reihe und/oder parallel miteinander verbundene Photovoltaikmodule gebildet sein, die gemeinsam die Ausgangsgleichspannung U_{S} des Photovoltaikgenerators an dem Ausgang 4 sowie einen Ausgangsstrom I_{S} liefern.

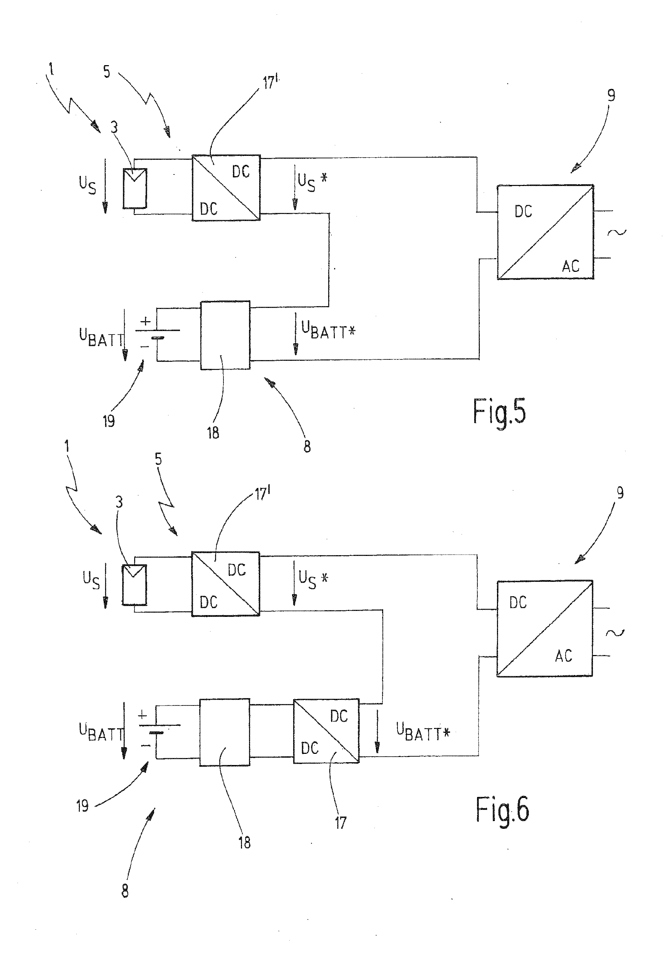

Der Generator 3 gehört zu einer Generatoranordnung 5, die außer den Generator 3 als solchen noch weitere Komponenten aufweisen kann. Bspw. kann die Generatoranordnung 5 einen an dem Ausgang des Generators 3 angeschlossenen Gleichspannungswandler zur Umsetzung der Generatorspannung auf ein höheres oder niedrigeres Niveau enthalten (vgl. Fig. 5 und 6). Sofern derartige Komponenten aber nicht ausdrücklich veranschaulicht oder angegeben sind, können die Ausdrücke "Generator" und "Generatoranordnung" weitgehend als Synonyme und gegeneinander austauschbar verwendet werden. Der Ausgang der Generatoranordnung 5 (bzw. des Generators 3 in Fig. 1) ist hier durch eine erste und eine zweite Anschlussklemme 6, 7 gekennzeichnet.

Ferner weist die Energieerzeugungsanlage 1 ein Energiespeichersystem 8 und einen Wechselrichter 9 auf, die in einem gemeinsamen Stromkreis in Reihe zueinander an dem Ausgang 4 des Generators 3 angeschlossen sind. Das Energiespeichersystem 8 dient dazu, die von dem Generator 3 bereitgestellte Energie wahlweise zwischenzuspeichern, um sie zum späteren Zeitpunkt nutzbar zu machen. Ferner dient das Energiespeichersystem 8 dazu, den Generator 3 bei der Bereitstellung von Eingangsenergie für den Wechselrichter 9 zu unterstützen, falls die Energie des Generators 3 zur alleinigen Speisung des Wechselrichters 9 nicht ausreicht. Das Energiespeichersystem 8 ist in größeren Einzelheiten nachstehend erläutert.

Der Wechselrichter 9 ist vorzugsweise durch eine elektronische Wechselrichterschalteranordnung gebildet, die einen grundsätzlich üblichen Aufbau mit Komponenten bzw. Baugruppen und Funktionsweisen umfassen kann, die es ihm ermöglichen, die an seinem Eingang oder Zwischenkreis 11, zwischen den Eingangsanschlüssen 10a, 10b bereitgestellte Eingangsgleichspannung U_{WR} und den eingespeisten Gleichstrom I_{S} in Wechselspannung und Wechselstrom an seinem Ausgang 12 zu wandeln, die bezüglich der Amplitude, Frequenz und Phase bspw. an die Wechselspannung des an den Wechselrichterausgang 12 angeschlossenen Netzes 2 oder die entsprechenden Größen eventueller Verbraucher angepasst sind.

Wenngleich verschiedenen Realisierungsformen eines Wechselrichters 9 mit oder ohne Transformator in ein- oder dreiphasiger Ausbildung, je nach Anwendung, zur Verwendung mit der vorliegenden Erfindung möglich sind, sollte erwähnt werden, dass der Wechselrichter eine ihm zugeordnete, vorzugsweise in diesem integrierte Steuer- und Regeleinrichtung 13 aufweist, die seinen Betrieb in Abhängigkeit von den momentanen Umgebungs- und Betriebsparametern der Energieerzeugungsanlage 1 steuert. Insbesondere werden die Umgebungs- und Betriebsparameter, wie die Spannung U_{WR} an dem Wechselrichtereingang 11 oder der von dem Generator 3 zur Verfügung stehende Strom I_{S} sowie gegebenenfalls weitere Einflussfaktoren, wie die momentane Umgebungstemperatur oder dgl. von einer Sensoreinrichtung 14 erfasst und an die übergeordnete Steuer- und Regeleinrichtung 13 gemeldet, die basierend auf den erfassten Werten den Betrieb des Wechselrichters 9 überwacht und steuert.

Die Steuer- und Regeleinrichtung 13 weist insbesondere eine Reglereinrichtung 16, die das MPP(Maximum-Power-Point)-Tracking übernimmt. Dabei wird der Wechselrichter in seinem jeweils individuellen maximalen Leistungspunkt im Sinne einer maximalen Einspeiseleistung betrieben. Das heißt, der MPP-Tracker 16 des Wechselrichters 9 regelt den von dem Generator 3 gelieferten Strangstrom I_{S} in Abhängigkeit von der an seinem Eingang anliegenden Spannung U_{WR} derart, dass die an dem Wechselrichterausgang 12 ausgegebene Leistung stets maximal wird. Es versteht sich, dass, nachdem der Wechselrichter 9 hier in Reihenschaltung mit dem Energiespeichersystem 8 an den Photovoltaikgenerator 3 angeschlossen ist, der Wert des Strangstroms I_{S} am MPP-Punkt des Wechselrichters 9 von dem Wert des optimalen Stromes des Generators 3, wenn dieser in seinem MPP-Punkt betrieben wird, geringfügig abweicht. Der MPP-Punkt eines PV-Generators hängt von der momentanen Bestrahlungsstärke, der Temperatur und dem Typ der Photovoltaikzellen ab.

Wie bereits erwähnt, ist das Energiespeichersystem 8 dazu vorgesehen, in Zeiten eines ausreichenden Energieangebots des Generators 3 einen Teil der von diesem bereitgestellten Gleichspannungsleistung zwischenzeitlich zu speichern, um sie später in Zeiten geringeren Energieangebots verfügbar zu machen. Eine derartige Energiespeicherung und -wiedergewinnung sollte möglichst effizient, mit geringen Umwandlungsverlusten erfolgen. Umwandlungsverluste treten insbesondere dann auf, wenn hohe Spannungen in geringe Ladespannungen für die Energiespeicher, bspw. Batterien, umgewandelt oder niedrige Batteriespannungen in relativ hohe Spannungen transformiert werden müssen, die jeweiligen Übersetzungsverhältnisse bei der Umwandlung also relativ hoch sind. Mit der erfindungsgemäßen Anordnung des Energiespeichersystems 8 in Reihe zu der Generatoranordnung 5 und dem Wechselrichter 9, sind, wie nachstehend in größeren Einzelheiten erläutert, nur geringe Übersetzungsverhältnisse erforderlich und damit nur geringe Umwandlungsverluste verbunden.

Wie aus Fig. 1 ersichtlich, weist das Energiespeichersystem 8 einen DC/DC-Wandler 17, eine Umpoleinrichtung 18 und eine Speichereinrichtung 19 auf. Die Speichereinrichtung 19 ist durch eine wiederaufladbare Batterieeinheit gebildet, die im Allgemeinen als Akkumulator bezeichnet wird und eine Reihe von seriell geschalteten elektrischen Batterien aufweisen kann. Die Batterieeinheit 19 kann mit einer niedrigen Batteriespannung von im Allgemeinen maximal 48 V oder sogar nur 12 V oder 24 V, wie sie allgemein üblich sind, arbeiten. Die Wahl der Batterienennspannung richtet sich jedoch nach den Möglichkeiten, welche sich aus der Ausgangsspannung des Generators 3 und dem Eingangsspannungsbereich des Wechselrichters 9 ergeben, und kann bis zu mehrere hundert Volt betragen. Bspw. kann es sinnvoll sein, bei einer maximalen Eingangsspannung des Wechselrichters von 850 V bzw. einer minimalen Eingangsspannung von 450 V bei einer Generatorspannung von 650 V eine Batterie mit einer Nennspannung von 200 V zu verwenden. Dies kann, wie bereits erwähnt, auch durch eine Reihenschaltung mehrerer Batterien erreicht werden.

Die Speichereinrichtung 19 ist in dem mit dem Wechselrichter 9 gemeinsamen Stromkreis oder Strang 21 angeordnet, in dem der Strangstrom I_{S} fließt, der gleichermaßen den Wechselrichter 9 und die Speichereinrichtung 19 durchfließt. Der Speichereinrichtung 19 ist der DC/DC-Wandler 17 zugeordnet, der mit einem ersten Anschluss 22 mit dem Wechselrichtereingangsanschluss 10b und mit einem zweiten Anschluss 23 mit der Anschlussklemme 7 des Generators 3 verbunden ist. Der DC/DC-Wandler 17 dient dazu, die an seinem Eingang 22, 23 anliegende Spannung U_{BATT}^{*} auf die Batteriespannung U_{BATT} zu transformieren, wenn die Batterieeinheit 19 geladen wird, und umgekehrt, wenn die Batterieeinheit 19 entladen wird.

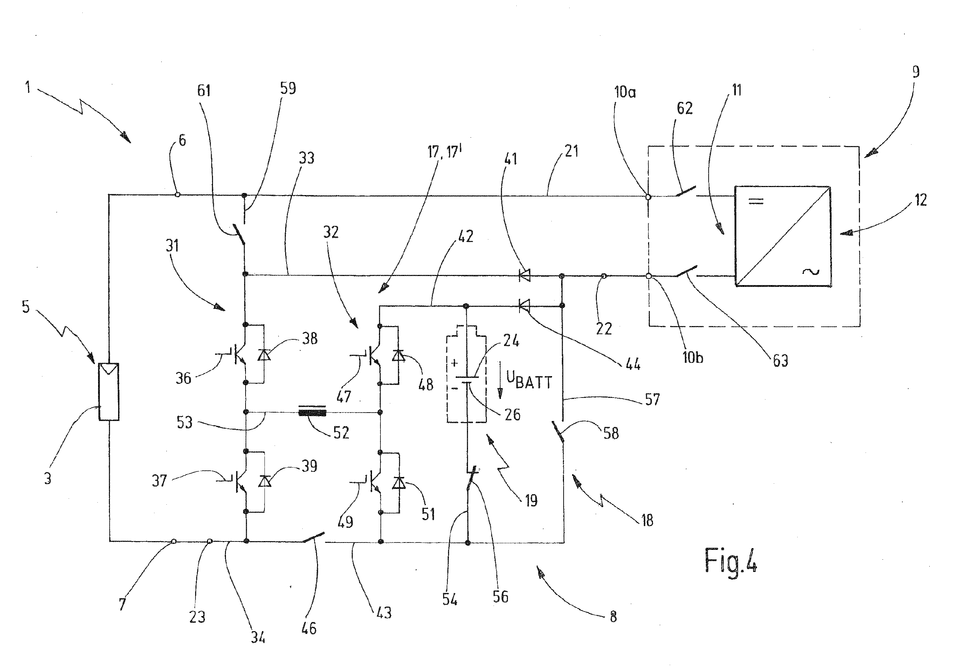

Der DC/DC-Wandler 17 weist eine hier nicht näher veranschaulichte Tiefhochsetzsteller-Schaltungsanordnung, also eine Kombination aus einem Hochsetz- und einem Tiefsetzsteller, die die Spannung in jeder Richtung, zu der Speichereinrichtung 19 hin oder von dieser weg, wahlweise hochsetzen oder tiefsetzen kann. Er dient im Betrieb als bidirektionaler Laderegler, der das Laden und Entladen der Batterieeinheit 19 regelt. Hierfür sind unterschiedliche geeignete Schaltungsanordnungen bidirektionaler DC/DC-Wandler bekannt. Eine beispielhafte konkrete Ausführungsform ist nachstehend im Zusammenhang mit Fig. 4 erläutert.

Die Umpoleinrichtung 18 ist dazu eingerichtet, die Batterieeinheit 19 wahlweise mit beliebiger Polung in den Stromkreis 21 einzukoppeln. Die Batterieeinheit 19 weist einen ersten Pol 24, insbesondere Pluspol, und einen zweiten Pol 26, insbesondere Minuspol, auf. Die Umpoleinrichtung 18 weist hier nur angedeutete Leiterzweige und Schaltermittel auf, die es ermöglichen, wahlweise den Pluspol 19 mit dem Wechselrichtereingangsanschluss 10b und den Minuspol 26 mit der Anschlussklemme 7 des Generators 3 oder umgekehrt zu verbinden.

Wie ferner aus Fig. 1 ersichtlich, weist das Energiespeichersystem 8 außerdem eine Sensoreinrichtung 27 und eine Steuereinrichtung 28, die diesem zugeordnet sind, auf. Die Sensoreinrichtung 27 und die Steuereinrichtung 28 sind vorzugsweise unabhängig von der Sensoreinrichtung 14 und der Steuer- und der Regeleinrichtung 13 des Wechselrichters 9, so dass das Energiespeichersystem 8 von keiner bestimmten Bauart eines Wechselrichters abhängig ist. Dadurch ist die Grundlage dafür geschaffen, dass die Erfindung mit unterschiedlichen Wechselrichterbauarten eingesetzt und auch in verschiedene bestehende Anlagen nachgerüstet werden. Die Hard- und Software für die Sensoreinrichtung 27 und die Steuereinrichtung 28 kann z.B. gemeinsam mit der Schaltungsanordnung für den DC/DC-Wandler 17 integriert sein. Prinzipiell kann diese aber auch gemeinsam mit der Hard- und Software der Sensor- und Steuereinrichtungen 13-16 des Wechselrichters 9 integriert sein.

Die Sensoreinrichtung 27 weist Sensormittel, wie Strom- und Spannungsfehler auf, die es ermöglichen, Signale an unterschiedlichen Stellen der Energieerzeugungsanlage 1 zu erfassen. Es können insbesondere eine oder mehrere der Größen erfasst werden, zu denen die von dem Generator 3 an seinem Ausgang 4 bereitgestellte Ausgangsgleichspannung U_{S}, der Generator- oder Strangstrom I_{S}, die Wechselrichtereingangs- bzw. Zwischenkreisspannung U_{WR}, die an den Anschlüssen 22, 23 des DC/DC-Wandlers 17 anfallende Spannung U_{BATT}^{*} und die Batteriespannung U_{BATT} gehören. Es können aber auch andere Parameter, die für eine effiziente Energiespeicherung relevant sein können, wie bspw. die Temperatur an der Batterieeinheit 19, gemessen werden.

Die Sensoreinrichtung 27 ist mit der Steuereinrichtung 28 kommunikationsmäßig verbunden und liefert die erfassten Messwerte zu dieser. Die Steuereinrichtung 28 steuert in der hier veranschaulichten bevorzugten Ausführungsform den Betrieb des DC/DC-Wandlers 17, der Umpoleinrichtung 18 und der Batterieeinheit 19 in Abhängigkeit von von der Sensoreinrichtung 27 gelieferten Signalen. Hierzu verarbeitet die Steuereinrichtung 28 die empfangenen Signale gemäß vorbestimmten logischen Regeln, um geeignete Steuersignale auszugeben.

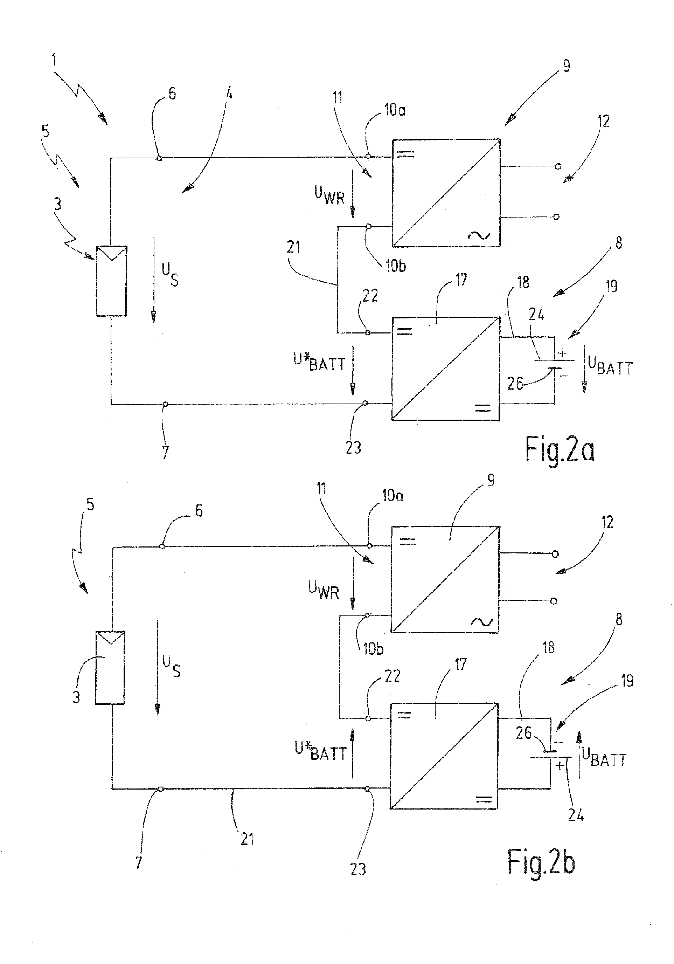

Figuren 2a und 2b zeigen vereinfachte Ersatzschaltbilder der Energieerzeugungsanlage 1 aus Fig. 1 für den Fall, dass die Batterieeinheit 19 gleichzeitig mit dem Betrieb des Wechselrichters 9 geladen wird (Fig. 2a), bzw. für den Fall, dass die Batterieeinheit 19 entladen wird, um gemeinsam mit dem Generator 3 den Wechselrichter 9 zu speisen. Wie veranschaulicht, ist in dem ersten Fall des Ladens der Batterieeinheit 19 diese mit der in Fig. 2a dargestellten Polung, also im Wesentlichen mit der gleichen Polarität wie der Wechselrichter 9 an den Stromkreis 21 angeschlossen, so dass der Pluspol 24 der Batterieeinheit 19 mit dem Wechselrichtereingangsanschluss 10b verbunden ist, der nicht mit einer Anschlussklemme des Generators 3 verbunden ist. Der Minuspol 26 der Batterieeinheit 19 ist wiederum über den DC/DC-Wandler 17 mit der Anschlussklemme 7 des Generators 3 verbunden.

In dem in Fig. 2b gezeigten Entlademodus ist die Polung umgekehrt, so dass die Batterieeinheit 19 nun mit gleichsinniger Polarität wie der Generator 3 an den Stromkreis 21 angeschlossen ist. Nun ist der Pluspol 24 der Batterieeinheit 19 mit der Anschlussklemme 7 des Generators 3 verbunden, während der Minuspol 26 mit dem Wechselrichtereingangsanschluss 10b verbunden ist.

Die soweit beschriebene Energieerzeugungsanlage 1 funktioniert wie folgt:

Im Betrieb wird, wenn die Generatorspannung U_{S} ausreicht, der Wechselrichter 9 mit Gleichstrom I_{S} gespeist, um an seinem Ausgang 12 Wechselstrom zu liefern. Bei Energieüberschuss des Generators 3, also wenn die Generatorleistung von angeschlossenen Verbrauchern nicht abgenommen oder nicht vollständig in ein Netz 2 eingespeist werden kann, kann parallel zu dem Betrieb des Wechselrichters 9, also gleichzeitig damit die Batterieeinheit 19 geladen werden. Hierzu steuert die Steuereinrichtung 28 die Umpoleinrichtung 18 geeignet an, um den DC/DC-Wandler 17 als Laderegler mit der angebundenen Batterieeinheit 19 mit der in Fig. 2a gezeigten, zu der Wechselrichtereingangsspannung U_{WR} gleichen Polarität in Reihe zu diesem anzuschließen. Die Generatorspannung U_{S}=U_{WR}+U_{BATT}^{*} teilt sich auf die Wechselrichtereingangsspannung U_{WR} und die Wandlereingangsspannung U_{BATT}^{*} auf, die die Batteriespannung U_{BATT} vorgibt. Der Strangstrom I_{S} fließt dabei gleichermaßen durch den Wechselrichter 9 und die Batterieeinheit 19. Der DC/DC-Wandler als Laderegler stellt das Übersetzungsverhältnis ü=U_{BATT}/U_{BATT}^{*} konstant ein, um den Anteil der Ladespannung festzulegen, und ermöglicht das Einstellen der Ladeleistung P_{BATT}=U_{BATT}^{*}I_{S} der Batterieeinheit 19. Die Batterieeinheit 19 kann somit passend, schonend aufgeladen werden.

Es kann ein geeigneter Bypassschaltkreis mit einer oder mehreren Bypassleitungen und Schaltern vorgesehen sein, um die Batterieeinheit 19 wahlweise aus dem Stromkreis 21 zu nehmen, wenn diese vollständig oder nahezu vollständig aufgeladen ist. Hierzu kann die Sensoreinrichtung 27 bspw. die Batteriespannung U_{BATT} oder den Batterieladestrom überwachen um festzustellen, wenn die Batteriespannung U_{BATT} nahezu maximal oder der Batterieladestrom nahezu Null wird.

Durch Umpolen der Batterieeinheit 19 mittels der Umpoleinrichtung 18, so dass die Batterieeinheit 19 nunmehr in der in Fig. 2b gezeigten Anordnung mit zu der Wechselrichterspannung U_{WR} gegensinnigen Polarisierung an den Stromkreis 21 angekoppelt ist, ist ferner ein Entladen der Batterie bedarfsweise möglich. Dann kann, wenn die Energie des Generators 3 zur Speisung des Wechselrichters 9 nicht ausreicht, ergänzend die Batterieenergie herangezogen werden. Der Wechselrichter 9 wird dann durch die Reihenschaltung des Photovoltaikgenerators 3 und des Energiespeichersystems 8 gespeist. Der DC/DC-Wandler 17 kann dabei die Entladeleistung über seine Ausgangsspannung (im Entladebetrieb ist der Ausgang des DC/DC-Wandlers 17 als zwischen den Anschlüssen 22, 23 angeordnet anzusehen) in einem weiten Bereich festlegen, der von einer Entladeleistung von Null bis zu einer maximalen Entladeleistung reicht. Die maximale Entladeleistung ist dabei von der maximalen Entladeleistung der Batterieeinheit 19 und der maximalen Eingangsspannung des Wechselrichters 9 begrenzt.

Die erfindungsgemäße Anordnung des Energiespeichersystems 8 ermöglicht es, Batterieeinheiten von der Gleichspannungsseite von Wechselrichtern in Reihe von diesen zu laden. Dies ermöglicht es, auf einfache Weise bereits vorhandene Photovoltaikanlagen oder andere Anlagen, die regenerative Energie nutzen, mit einem elektrischen Speicher auszurüsten, ohne den vorhandenen Wechselrichter umrüsten oder ersetzen zu müssen. Ferner kann das erfindungsgemäße Energiespeichersystem leicht bei Neuinstallationen, unabhängig von jeweils eingesetzten Wechselrichterfabrikaten, eingebaut werden.

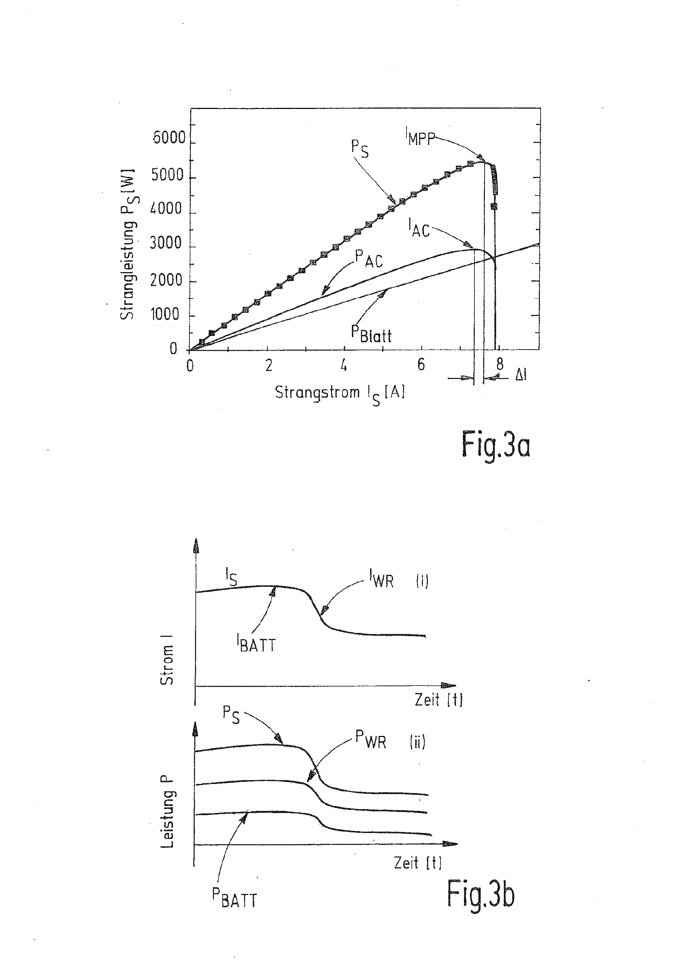

Fig. 3a zeigt beispielhafte Leistungskennlinien für Komponenten der erfindungsgemäßen Energieerzeugungsanlage 1. Dargestellt sind die Ladeleistung der Batterie P_{BATT}, die Einspeiseleistung P_{AC} des Wechselrichters 9 und die gesamte Anlagenleistung P_{S}=P_{AC}+P_{BATT} als Funktion des Strangstroms I_{S}. Die Batterieleistung P_{BATT} steigt bei konstanter Batteriespannung U_{BATT} linear mit der Größe des Strangstroms I_{S} an. Die Leistungskennlinie des Wechselrichters 9 zeigt ein charakteristisches Verhalten, bei dem die Leistung P_{AC} im weiten Bereich des Stroms I_{S} nahezu linear bis zu dem Punkt der maximalen Leistung, der hier durch den zugehörigen Strom I_{AC} angezeigt ist, ansteigt und anschließend wieder fällt. Die gesamte Anlagenleistung P_{S} ist die Summe der beiden Leistungsgrößen P_{AC} und P_{BATT}.

Die Reihenschaltung aller Komponenten 3, 8 und 9 führt zu einer reduzierten Eingangsspannung U_{WR} am Eingang 11 des Wechselrichters 9 und dadurch zu einer reduzierten Einspeiseleistung P_{AC}=U_{WR}I_{S}. Der in dem Wechselrichter 9 integrierte MPP-Tracker 16 stellt diesen Strangstrom auf den Wert I_{AC} ein, der zwar der maximalen Einspeiseleistung des Wechselrichters 9 aber nicht dem maximalen Leistungspunkt (MPP-Punkt) der gesamten Energieerzeugungsanlage 1 entspricht. Wie aus Fig. 3a ersichtlich, weicht der Wert I_{AC} von dem Wert I_{MPP}, den die Anlage 1 in dem MPP-Punkt aufweist, geringfügig ab. Wie festgestellt wurde ist diese Abweichung jedoch so gering, dass die damit verbundenen Verluste P_{MV} = MAX|P_{S} |-(P_{BATT}(I_{AC})+P_{AC}(I_{AC})) < 1% P_{PS} betragen und vernachlässigbar sind. Jedenfalls werden diese Verluste durch die erzielten Vorteile der Erfindung, insbesondere die leichte Regelbarkeit der Anlagenkomponenten, den einfachen und kostengünstigen Aufbau des Energiespeichersystems 8, seine leichte Integrierbarkeit, flexible Einsatzmöglichkeit, etc., mehr als wett gemacht.

Fig. 3b zeigt in der oberen Darstellung (i) einen beispielhaften Verlauf des Photovoltaikstromes I_{S} in Abhängigkeit von der Zeit t einer Photovoltaikanlage 1 bei wechselnder Einstrahlung. Durch Wolkenzug oder ähnliches kann es beim Ausgangsstrom I_{S} einer Photovoltaikanlage zu leichten bis starken Schwankungen oder Einbrüchen des photovoltaisch generierten Stromes I_{S} kommen. Unter der vereinfachten Annahme, dass die Ausgangsspannung des Photovoltaikgenerators 3 in gewissen Grenzen nahezu beleuchtungsunabhängig ist, folgt die Ausgangsleistung P_{S} der Anlage 1 dem Strom I_{S}, wie dies in der unteren Darstellung (ii) in Fig. 3b dargestellt ist. Durch die Reihenschaltung des Batterieladereglers 17 zu dem Photovoltaikgenerator 3 und dem Wechselrichter 9 unterteilt sich die Leistung P_{S} der Anlage 1 in einen Teil P_{WR}, der zur Einspeisung an den Wechselrichter 9 abgegeben wird, und einen Teil P_{BATT}, der zur Ladung der Batterie dient. Dem Wechselrichter 9 steht dann eine reduzierte Spannung zur Verfügung, und das Verhältnis der Spannung U_{WR} am Eingang des Wechselrichters 9 zur Spannung U_{BATT}^{*} am Eingang 22, 23 des Ladereglers 17, die über den letzteren zur Ladung der Batterie abgegriffen wird, definiert den Anteil der Ladeleistung P_{BATT} der Batterieeinheit 19.

Im Entladebetrieb wird über den bidirektionalen Laderegler 17 die Eingangsspannung U_{WR} an dem Wechselrichter 9 vergrößert und somit bei von dem Generator 3 vorgegebenem Strom I_{S} die Eingangsleistung an dem Wechselrichter 9 in Abhängigkeit von der Ausgangsspannung des Entladereglers 17 erhöht. Ein wesentlicher Vorteil liegt dabei darin, dass der Anteil der zu entladenden Leistung bzw. der Ladeleistung der Batterieeinheit 19 lediglich gestellt und nicht geregelt, jedenfalls nicht in Bezug auf den Lade- bzw. Entladestrom geregelt wird. Damit ist ein Regelkonflikt zwischen der Batterieladung und der MPP-Regelung des Wechselrichters 9 aus physikalischen Gründen, nämlich über den gemeinsamen Strangstrom I_{S}=I_{BATT}=I_{WR}, der durch alle beteiligten Baugruppen 8, 9 fließt, ausgeschlossen.

Somit ermöglicht die Erfindung eine kostengünstige, flexible Speicherlösung, die sich leicht nachrüsten oder installieren lässt, ohne dass Probleme bei der Regelung der Ladeleistung oder des Einspeiseleistung auftreten. Das MPP-Tracking des Wechselrichters 9 wird durch die gewählte Reihenschaltung nur sehr gering beeinflusst, so dass die MPP-Suche bei dem Wechselrichter bleiben kann. Zusätzlich sorgt die Reihenschaltung dafür, dass Leistungsschwankungen des Generators 3 über den gemeinsamen Strom sofort und unmittelbar auch die Ladeleistung beeinflussen. Wenn die Generatorleistung sinkt, sinkt auch die Ladeleistung, und wenn die Generatorleistung steigt, so steigt auch die Ladeleistung. Gleiches gilt auch für die Entladeleistung.

Hinzu kommt noch, dass die Batterieeinheit 19 bei der Reihenschaltung vorwiegend über den als Tiefsetzsteller wirkenden Laderegler 17 geladen bzw. entladen wird. Insbesondere hat die Entladung der Batterieeinheit 19 über einen Tiefsetzsteller 17 zur Reduktion der Batteriespannung den entscheidenden Vorteil einer erhöhten Effizienz im Vergleich zu der üblichen Entladung von an den Generator und Wechselrichter parallel angeschlossenen Batterien mittels eines Hochsetzstellers. Ein Tiefsetzsteller hat über einen weiten Bereich deutlich bessere Wirkungsgrade im Bereich von 98%-99% oder mehr im Vergleich zu einem Hochsetzsteller.

In Fig. 4 ist ein Beispiel einer konkreten Ausführungsform eines Energiespeichersystems 8 gemäß der Erfindung veranschaulicht. Soweit Übereinstimmungen im Bau und/oder Funktion bestehen, wird unter Zugrundelegung gleicher Bezugszeichen auf die obige Beschreibung im Zusammenhang mit den Figuren 1 bis 3 Bezug genommen.

In Fig. 4 ist der gemeinsame Stromkreis 21 mit dem Generator 3, insbesondere Photovoltaikgenerator, dem Wechselrichter 9 und dem Energiespeichersystem 8 veranschaulicht. Das Energiespeichersystem 8 weist eine Batterieeinheit 19 auf, die einen Pluspol 24 und einen Minuspol 26 aufweist. Die Batterieeinheit 19 ist an den bidirektionalen Laderegler bzw. DC/DC-Wandler 17 angeschlossen.

Der DC/DC-Wandler 17 ist hier als getakteter induktiver Spannungsteiler in Vollbrückenbauweise mit taktbaren elektronischen Schalterelementen ausgeführt. Insbesondere weist der DC/DC-Wandler einen ersten Brückenzweig 31 und einen zweiten Brückenzweig 32 auf. Der erste Brückenzweig ist über eine erste Verbindungsleitung 33 mit dem Wechselrichtereingangsanschluss 10b verbunden, während er über eine zweite Verbindungsleitung 34 mit der Anschlussklemme 7 des Generators 3 verbunden ist. In dem ersten Brückenzweig 31 ist eine Reihenschaltung eines ersten und eines zweiten taktbaren Halbleiterschalters 36, 37 angeordnet, denen jeweils eine Freilaufdiode 38, 39 in antiparalleler Anordnung zugeordnet ist. Es können bspw. IGBTs mit monolithisch integrierter Diode verwendet werden. In dem dargestellten Beispiel sind der erste Schalter 36 und die erste Freilaufdiode 38 mit dem Wechselrichtereingangsanschluss 10b über eine Stromrichterdiode 41 verbunden, die in Durchlassrichtung zu dem Schalter 36 hin angeschlossen ist. Die Parallelschaltung des zweiten Schalters 37 und der zweiten Freilaufdiode 39 ist mit der Anschlussklemme 7 der Generatoranordnung 5 verbunden.

Der zweite Brückenzweig 32 der DC/DC-Wandlervollbrücke ist über eine dritte Verbindungsleitung 42 sowohl mit dem Pluspol 24 der Batterieeinheit 19 als auch mit dem Wechselrichtereingangsanschluss 10b verbunden und über eine vierte Verbindungsleitung 43 mit dem zweiten Schalter 37 des ersten Brückenzweigs 31 und der Generatoranschlussklemme 7 verbindbar. In der dritten Verbindungsleitung 42 ist eine zweite Stromrichterdiode 44 eingefügt, die in Durchlassrichtung von dem Wechselrichter 9 weg zu dem Pluspol 24 und dem zweiten Brückenzweig 32 hin zeigt. In der vierten Verbindungsleitung 43 ist ein ansteuerbarer Schalter 46 angeordnet, der ein wahlweises Herstellen oder Unterbrechen der Verbindung zwischen dem ersten und dem zweiten Brückenzweig 31, 32 über die vierte Verbindungsleitung 43 ermöglicht.

Ähnlich wie der erste Brückenzweig 31 weist auch der zweite Brückenzweig 32 eine Reihenschaltung aus einem dritten Schalter 47 mit zugehöriger antiparalleler dritter Freilaufdiode 48 und einem vierten Schalter 49 mit hierzu antiparalleler vierter Freilaufdiode 51 auf. Alle Schalter 36, 37, 47, 49 weisen eine Durchlassrichtung zu der Anschlussklemme 7 des Generators 3 hin auf, so dass die Freilaufdioden 38, 39 bzw. 48, 49 in Durchlassrichtung zu der ersten bzw. dritten Verbindungsleitung 33 bzw. 42 hin geschaltet sind.

Außerdem weist der DC/DC-Wandler 17 eine Induktivität 52 als Energiespeicher auf, die in einem Verbindungszweig 53 angeordnet ist, der den Verbindungspunkt zwischen dem ersten und dem zweiten Schalter 36, 37 mit einem Verbindungspunkt zwischen dem dritten und dem vierten Schalter 47, 49 verbindet.

Die Batterieeinheit 19 ist in einem Batteriezweig 54 angeordnet, der parallel zu dem zweiten Brückenzweig 32 zwischen der dritten und der vierten Verbindungsleitung 42, 43 angeschlossen ist. In dem Batteriezweig 54 ist hier zwischen dem Minuspol 26 und der vierten Verbindungsleitung 43 ein Unterbrecher 56 eingefügt, der wahlweise geöffnet werden kann, um die Batterieeinheit 19 wahlweise von der vierten Verbindungsleitung 43 und dem Generator 3 zu trennen.

Zu der Umpoleinrichtung 18, die zur wahlweisen Umpolung der Batterieeinheit 19 beim Anschluss an den Stromkreis 21 dient, gehören der ansteuerbare Schalter 46 in der vierten Verbindungsleitung 43 und eine Koppelleitung 57, die den Wechselrichtereingangsanschluss 10b mit einem Verbindungspunkt zwischen dem Batteriezweig 54 und der vierten Verbindungsleitung 43 koppelt. Die Koppelleitung 57 ist auf der Anodenseite der Stromrichterdioden 41, 44 mit dem Wechselrichtereingangsanschluss 10b verbunden. In der Koppelleitung 57 ist ein ansteuerbarer Schalter 58 eingefügt, der eine wahlweise Herstellung bzw. Trennung der Leitungsverbindung zwischen dem Wechselrichtereingangsanschluss 10b und dem Batteriezweig 54 ermöglicht.

Ferner ist in der in Fig. 4 dargestellten beispielhaften Ausführungsform eine hier optionale Verbindungsleitung 59 mit einem Schalter 61 veranschaulicht, die dazu dienen können, den DC/DC-Wandler 17 wahlweise parallel an den Generator 3 anzuschließen oder evtl. die Batterieeinheit 19 bedarfsweise auch parallel an den Generatorausgang 4 bzw. den Wechselrichtereingang 11 anzuschließen. Darüber hinaus sind noch weitere optionale Schaltermittel 62, 63 veranschaulicht, mittels derer der Wechselrichter 9 bedarfsweise von dem System getrennt bzw. an dieses angeschlossen werden kann.

Mit der dargestellten Schaltung des Energiespeichersystems sind alle relevanten Betriebsmodi, wie Einspeisen von Energie mit Laden oder Entladen der Batterieeinheit 19, jeweils mit Tief- oder Hochsetzung der Batteriespannung je nach den gegebenen Leistungen des Generators 3, des Wechselrichters 9 und der Batterieeinheit 19 realisierbar.

Z.B. kann der Wechselrichter 9 durch den Generator 3 gespeist werden, wenn der Schalter 58 in der Koppelleitung 57 und der Schalter 46 in der vierten Verbindungsleitung 43 geschlossen werden. Ein Strom fließt dann von dem Wechselrichter 9 über die Koppelleitung 57 und die vierte Verbindungsleitung 43 zurück zu dem Generator 3. Die Brückenschalter 36, 37, 47, 49 sind geöffnet, so dass kein Strom über den Laderegler fließt. Die zweite Stromrichterdiode 44 verhindert bei hinreichender Batteriespannung, dass die Batterieeinheit 19 unkontrolliert geladen wird.

Soll gleichzeitig mit dem Einspeisen von Energie die Batterieeinheit 19 seriell geladen werden, wird der Schalter 58 in der Koppelleitung 57 geöffnet und der DC/DC-Wandler 17 geeignet als Hochsetzsteller betrieben. Hierzu wird der erste Schalter 36 in dem ersten Brückenzweig 31 geschlossen und der vierte Schalter 49 in dem zweiten Brückenzweig 32 mit einem vorgegebenen Taktverhältnis getaktet. Beim Schließen des vierten Schalters 49 fließt ein Strom von dem Wechselrichter 9 über die erste Stromrichterdiode 41, die beiden Schalter 36, 49 und die Induktivität 52, die dadurch magnetisch aufgeladen wird, zu dem Generator 3. Beim Öffnen des vierten Schalters 49 fließt ein Freilaufstrom nun über die dritte Freilaufdiode 48 des dritten Schalters 47 und über die Batterieeinheit 19, die dadurch aufgeladen wird. Durch das Festlegen eines geeigneten Verhältnisses bei der Taktung des vierten Schalters 49 kann das Übersetzungsverhältnis zwischen der an dem Eingang 22, 23 des DC/DC-Wandlers bereitgestellten Spannung und der Batteriespannung durch die Steuereinrichtung 28 in Abhängigkeit von von der Sensoreinrichtung 27 erfassten Bedingungen den Ladeanforderungen gemäß eingestellt werden.

Wenn die Batteriespannung hinreichend klein ist, kann die Batterieeinheit 19 bei geöffneten Schaltern 36, 37, 47, 49 und 58 und geschlossenem Schalter 46 in der vierten Verbindungsleitung 43 unmittelbar von dem Wechselrichter 9 über die zweite Stromrichterdiode 44 geladen werden.

Zum Entladen der Batterieeinheit 19 werden der Schalter 58 in der Koppelleitung 57 geschlossen und der Schalter 46 in der vierten Verbindungsleitung 43 geöffnet. Dann wird der DC/DC-Wandler 17 als Tiefsetzsteller betrieben, wobei hierzu z.B. der dritte Brückenschalter 47 mit einem von der Steuereinrichtung 28 vorgegebenen Taktverhältnis getaktet wird, während der zweiten Brückschalter 37 geschlossen bleibt. Im Schließzustand des Schalters 47 fließt Strom von dem Wechselrichtereingangsanschluss 10b über die Koppelleitung 57 und die Batterieeinheit 19 vom Minus- zum und Pluspol und ferner von dem Pluspol 24 über die Schalter 37, 47 und die Induktivität 52 zu der Anschlussklemme 7 des Generators 3. Beim Öffnen des dritten Brückenschalters 37 kommutiert der Strom nun über die vierte Freilaufdiode 51 des vierten Brückenschalters 49 und fließt über die Induktivität 52 und den geschlossenen zweiten Brückerschalter 37 weiter zu der Anschlussklemme 7, ohne die Batterie zu durchströmen.

Bei hinreichend hoher Batteriespannung können die Schalter 37, 47 auch dauerhaft geschlossen sein, um den Pluspol 24 der Batterieeinheit 19 unmittelbar mit der Generatoranschlussklemme 7 zu verbinden und die Batterieeinheit 19 mit einem Übersetzungsverhältnis des DC/DC-Wandlers gleich 1 zu entladen.

Jedenfalls wird dabei gleichzeitig der Wechselrichter 9 mit der Summenspannung aus der Generatorspannung und der mit dem Übersetzungsverhältnis multiplizierten (tiefgesetzten) Batteriespannung versorgt, so dass er eine vergrößerte Ausgangsleistung erzeugen kann.

Selbstverständlich kann beim Entladen der Batterieeinheit 19 anstatt des dritten Brückenschalters 47 auch der zweite Brückenschalter 37 getaktet werden, während der dritte Brückenschalter 47 geschlossen bleibt.

Ferner ist es prinzipiell möglich, den DC/DC-Wandler derart zu betreiben, dass die Spannung beim Laden der Batterie tiefgesetzt oder beim Entladen der Batterie hochgesetzt wird.

Ebenfalls ist es möglich, durch Schließen des Schalters 61 in der Verbindungsleitung 59 das Energiespeichersystem 8 parallel an den Generator 3 und den Wechselrichter 9 anzuschließen. Dann kann z.B. in Nachtstunden oder unter sonstigen Bedingungen, in denen der Generator 3 keine Energie liefert, die Batterieeinheit 19 über den dann als Hochsetzsteller betriebenen DC/DC-Wandler 17 alleine den Wechselrichter 9 speisen. Dies ist aber im Allgemeinen nicht erforderlich. Die wesentlichen Vorteile der Erfindung, wie sie oben beschrieben sind, werden durch die Ankopplung des Energiespeichersystems 8 in Reihenschaltung zu dem Generator 3 und dem Wechselrichter 9 auf der Gleichspannungsseite des Wechselrichters 9 erzielt.

Figuren 5 und 6 zeigen modifizierte Ausführungsformen der vorstehend beschriebenen Energieerzeugungsanlage 1 gemäß der Erfindung. Soweit Übereinstimmungen im Bau und/oder Funktion bestehen, wird unter Zugrundelegung gleicher Bezugszeichen auf die obige Beschreibung im Zusammenhang mit den Figuren 1 bis 4 Bezug genommen. Die Darstellungen sind stark schematisiert, um lediglich die zugrundliegenden Prinzipien zu erläutern und die Beschreibung knapp zu halten, während weitere Details für einen Fachmann der obigen Beschreibung entnehmbar oder ohne weiteres erkennbar sind. Insbesondere können in den Figuren 5 und 6 einige Komponenten der Energieerzeugungsanlage 1, die zwar vorhanden, aber für das Verständnis der erfindungsgemäßen Ausführungsformen und deren Variationsmöglichkeiten nicht unbedingt notwendig sind, wie bspw. die Sensoreinrichtung 27, die Steuereinrichtung 28, etc. hier der Einfachheit und Übersichtlichkeit wegen nicht dargestellt sein.

Die in Fig. 5 dargestellte Ausführungsform unterscheidet sich von derjenigen nach Fig. 1 im Wesentlichen dadurch, dass nun ein DC/DC-Wandler 17' dem Generator 3 zugeordnet ist und einen Teil der Generatoranordnung 5 bildet, während das Energiespeichersystem 8 frei von einem der Speichereinrichtung 19 zugeordneten DC/DC-Wandler, wie dem DC/DC-Wandler 17 nach Fig. 1, ist. Der DC/DC-Wandler 17' ist hier an dem Ausgang 4 des Generators 3 parallel zu diesem angeschlossen und mit dem Energiespeichersystem 8 in Reihe verbunden, das im vorliegenden Fall im Wesentlichen nur die Batterieeinheit 19 und die Umpoleinrichtung 18 aufweist, die, wie oben ausgeführt, für die Umpolung der Batterieeinheit 19 je nach Lade- bzw. Entladevorgang sorgt. Der DC/DC-Wandler 17' kann abhängig von den gewünschten Betriebsweisen und -bereichen wahlweise entweder ein Tiefsetzsteller oder ein Hochsetzsteller sein. Vorzugsweise weist der DC/DC-Wandler 17' aber eine kombinierte Tiefhochsetzstellerschaltung, die beide Betriebsarten und einen insgesamt erweiterten Betriebsbereich für ihn selbst, den Wechselrichter 9 und die gesamte Anlage 1 ermöglicht.

Z.B. kann beim Entladen der Batterieeinheit 19 in Reihe zu der Generatoranordnung 5 der DC/DC-Wandler 17' als Tiefsetzsteller arbeiten bzw. betrieben werden, um mit der Tiefsetzung der Generatorspannung U_{S} den Generatorstrom auf einen höheren Strangstrom I_{S} zu vergrößern. Bei der erfindungsgemäßen Reihenschaltung der Batterieeinheit 19 mit dem Wechselrichter 9 und der Generatoranordnung 5 wird dadurch der Entladestrom der Batterieeinheit 19 unmittelbar erhöht und damit ihre Entladeleistung vergrößert. Der Einsatz eines Tiefsetzstellers 17' zur Reduzierung der Generatorspannung hat, wie auch der Einsatz des Tiefsetzstellers 17 zur Reduzierung der Batteriespannung in der Ausführungsform nach Fig. 1, eine deutlich höhere Effizienz gegenüber herkömmlichen Methoden, die eine Entladung der Batterie parallel zum Generator mittels eines Hochsetzstellers bewirken. Ein Tiefsetzsteller kann hier über einen weiten Bereich Wirkungsgrade von 98-99 % oder mehr aufweisen, die wesentlich höher sind als ein Hochsetzsteller sie hier erzielen kann.

Ist der Strangstrom I_{S} zu hoch, so kann der DC/DC-Wandler 17' als Hochsetzsteller arbeiten bzw. betrieben werden, um seine Ausgangsspannung anzuheben und seinen Eingangsstrom, der dem Generatorstrom entspricht, auf einen niedrigeren Wert zu reduzieren, wodurch der Batterieentladestrom verringert ist.

Entsprechend kann im Ladebetriebsmodus ein Tiefsetzsteller 17' an dem Generator 3 bei umgepolter Batterieeinheit 19 die Ladeleistung erhöhen, während ein Hochsetzsteller 17' parallel zu dem Generator 3 die Ladeleistung durch reduzierten Batteriestrom verringern kann. Der DC/DC-Wandler 17' der Generatoranordnung 5 ist somit in der Lage, die Lade- und Entladeleistung der Speichereinrichtung 19 gezielt zu beeinflussen, und kann daher als ein Lade-/Entladeregler angesehen werden.

Wenngleich unterschiedliche Schaltungsanordnungen für Tiefhochsetzsteller wie auch zum Umpolen der Batterieeinheiten allgemein bekannt sind, können einige der vorstehend erläuterten Betriebsmodi des DC/DC-Wandlers 17' anhand der Schaltungsanordnung nach Fig. 4 realisiert werden. Um ein Beispiel anzugeben, wird für den Entladebetriebsmodus, wenn der DC/DC-Wandlers 17' als Tiefsetzsteller arbeiten soll, der Schalter 61 in der Verbindungsleitung 59 geschlossen, um den DC/DC-Wandler 17 nun als DC-DC-Wandler 17' parallel an den Generator 3 zu schalten. Ferner wird der Schalter 58 in der Koppelleitung 57 geschlossen, um den Minuspol 26 der Batterieeinheit 19 mit dem Wechselrichteranschluss 10b zu verbinden, und der Schalter 46 wird geöffnet. Anschließend wird, während die Brückenschalter 36, 49 geöffnet sind und der Brückenschalter 47 geschlossen ist, der Brückenschalter 37 geeignet getaktet, um im Schließzustand Strom von dem Wechselrichter 9 über die Batterieeinheit 19 den Schalter 47, die Induktivität 52 und den Schalter 37 zu dem Generator 3 zurückzuführen. Im Offenzustand des Schalters 37 kommutiert der Strom dann über die Freilaufdiode 38 und den geschlossenen Schalter 61.

Ein Laden der Batterieeinheit 19 mit einem an dem Generator 3 parallel angeschlossenen Tiefsetzsteller 17' kann bei geöffnetem Schalter 58 und geöffnetem Brückenschalter 47 durch Takten des Brückenschalters 37 bewerkstelligt werden. Ähnlich kann der DC/DC-Wandler 17' nach Fig. 4 Hochsetzsteller des Generators 3 zum Laden oder Entladen der Batterieeinheit verwendet werden, wenn z.B. die Stromrichterdioden 41, 44 durch Schalter ersetzt und/oder bedarfsweise weitere Schalter in die Schaltung eingefügt werde, um geeignete Strompfade zu schaffen.

In Fig. 6 ist eine weitere Ausführungsform der Erfindung veranschaulicht, die im Wesentlichen durch eine Kombination der Ausführungsformen nach Fig. 1 und Fig. 5 gebildet ist. Hier sind sowohl ein DC/DC-Wandler 17' als Teil der Generatoranordnung 5 am Ausgang 4 des Generators 3 angeordnet, um dessen Spannungsniveau anzupassen, als auch ein DC/DC-Wandler 17 als Teil des Energiespeichersystems 8 an der Speichereinrichtung bzw. Batterieeinheit 19 für deren Spannung U_{BATT} angeschlossen. Damit kann die Ladung und Entladung der Batterieeinheit 19 je nach Anforderung und mit größter Flexibilität unter der Steuerung durch die Steuereinrichtung 28 wahlweise mittels eines der DC/DC-Wandler 17, 17' oder beider gleichzeitig, mit Tief- oder Hochsetzung der Generatorspannung U_{S} und/der der Spannung für (U_{BATT}^{*}) bzw. von (U_{BATT}) der Batterieeinheit 19 in der oben erläuterten Weise kontrolliert erfolgen.

Es ist eine Energieerzeugungsanlage 1, insbesondere für regenerative Energie, offenbart, die eine Generatoranordnung 5 mit einem Generator 3, der eine variable Gleichspannungsleistung in Abhängigkeit von Betriebs- und/oder Umgebungsbedingungen liefert, einen Wechselrichter 9, der an die Generatoranordnung 5 angeschlossen ist, um eingangsseitige Gleichspannungsleistung in ausgangsseitige Wechselspannungsleistung umzuwandeln, und ein Energiespeichersystem 8 aufweist, das eine bedarfsweise Zwischenspeicherung von Energie und Wiedergewinnung der gespeicherten Energie, um den Wechselrichter 9 zu speisen, ermöglicht. Das Energiespeichersystem 8 ist auf der Gleichspannungsseite des Wechselrichters 9 in Reihe zu der Generatoranordnung 5 und dem Wechselrichter 9 angeschlossen und weist eine Speichereinrichtung 19 auf, die in der Lage ist, langfristig Energie zu speichern. Wenigstens ein DC/DC-Wandler 17, 17' ist zur Energieniveauanpassung entweder an der Speichereinrichtung 19 und/oder dem Generator 3 angeschlossen.

## Patentansprüche

1. Energieerzeugungsanlage, insbesondere für regenerative Energie,
mit einer Generatoranordnung (5), die einen Generator (3) aufweist, der eine variable Gleichspannungsleistung in Abhängigkeit von Betriebs- und/oder Umgebungsbedingungen liefert;
mit einem Wechselrichter (9), der an der Generatoranordnung (5) angeschlossen ist, um eingangsseitige Gleichspannungsleistung in ausgangsseitige Wechselspannungsleistung umzuwandeln; und
mit einem Energiespeichersystem (8) zur bedarfsweisen Zwischenspeicherung von Energie und Wiedergewinnung der gespeicherten Energie, um den Wechselrichter (9) zu speisen, wobei das Energiespeichersystem (8) in Reihe zu der Generatoranordnung (5) angeschlossen ist und eine Speichereinrichtung (19) aufweist, die in der Lage ist, Energie zu speichern, und
mit einem der Speichereinrichtung (19) oder dem Generator (3) zugeordneten DC/DC-Wandler (17, 17') zur Energieniveauanpassung.

2. Energieerzeugungsanlage nach Anspruch 1, **dadurch gekennzeichnet, dass** das Energiespeichersystem (8) in Reihe zu dem Wechselrichter (9) angeschlossen ist.

3. Energieerzeugungsanlage nach Anspruch 1 oder 2, **dadurch gekennzeichnet, dass** sie eine Photovoltaikanlage mit einem Photovoltaikgenerator (3) ist, der durch einen oder mehrere miteinander verbundene Photovoltaikmodule gebildet ist.

4. Energieerzeugungsanlage nach einem der vorhergehenden Ansprüche, **dadurch gekennzeichnet, dass** der Wechselrichter (9) eine integrierte Reglereinrichtung (16) zur Durchführung eines MPP-Tracking aufweist, wobei die Reglereinrichtung (16) den Wechselrichter (9) im Sinne eines maximalen Leistungsertrags auf der Basis der zur Verfügung stehenden Gleichspannungsleistung am Eingang (11) des Wechselrichters (9) regelt.

5. Energieerzeugungsanlage nach einem der vorhergehenden Ansprüche, **dadurch gekennzeichnet, dass** die Speichereinrichtung (19) durch eine wiederaufladbare Batterieeinheit gebildet ist, die aus einem oder mehreren vorzugsweise in Reihe miteinander verbundenen elektrischen Akkumulatoren besteht.

6. Energieerzeugungsanlage nach einem der vorhergehenden Ansprüche, **dadurch gekennzeichnet, dass** die Speichereinrichtung (19) einen ersten Pol (24) und einen zweiten Pol (26) aufweist und dass Umpolmittel (18) vorgesehen sind, die eingerichtet sind, um wahlweise entweder den ersten oder den zweiten Pol (24, 26) mit einem Anschluss (7) der Generatoranordnung (5) und den anderen von dem ersten oder zweiten Pol (24, 26) mit einem Anschluss (10b) des Wechselrichters (9) zu verbinden.

7. Energieerzeugungsanlage nach einem der vorhergehenden Ansprüche, **dadurch gekennzeichnet, dass** entweder ein DC/DC-Wandler (17') am Ausgang (4) des Generators (3) oder ein DC/DC-Wandler (17) an der Speichereinrichtung (19) angeschlossen ist oder beides.

8. Energieerzeugungsanlage nach einem der vorhergehenden Ansprüche, **dadurch gekennzeichnet, dass** der DC/DC-Wandler (17, 17') eine Tiefhochsetzstellerschaltung aufweist.

9. Energieerzeugungsanlage nach einem der vorhergehenden Ansprüche, **dadurch gekennzeichnet, dass** der DC/DC-Wandler (17, 17') als getakteter Spannungssteller in Vollbrückenbauweise ausgeführt ist.

10. Energieerzeugungsanlage nach einem der vorhergehenden Ansprüche, **dadurch gekennzeichnet, dass** der DC/DC-Wandler (17, 17') einen ersten Brückenzweig (31), der über eine erste Verbindungsleitung (33) mit dem Wechselrichter (9) und über eine zweite Verbindungsleitung (34) mit dem Generator (3) verbunden ist und eine Reihenschaltung aus einem ersten und einem zweiten taktbaren Schalter (36, 37) mit jeweils einer antiparallelen Freilaufdiode (38, 39) aufweist, einen zweiten Brückenzweig (32), der über eine dritte Verbindungsleitung (42) mit dem Wechselrichter (9) und über eine vierte Verbindungsleitung (43) mit dem Generator (3) verbindbar ist und eine Reihenschaltung aus einem dritten und einem vierten taktbaren Schalter (47, 49) mit jeweils einer antiparallelen Freilaufdiode (48, 51) aufweist, und eine Induktivität (52) aufweist, die in einem Verbindungszweig (53) angeordnet ist, der den Verbindungspunkt zwischen dem ersten und dem zweiten Schalter (36, 37) mit dem Verbindungspunkt zwischen dem dritten und dem vierten Schalter (47, 49) verbindet.

11. Energieerzeugungsanlage nach Anspruch 10, **dadurch gekennzeichnet, dass** die Speichereinrichtung (19) in einem Speicherzweig (54) angeordnet ist, der parallel zu dem zweiten Brückenzweig (32) zwischen der dritten Verbindungsleitung (42) und der vierten Verbindungsleitung (43) angeschlossen ist.

12. Energieerzeugungsanlage nach Anspruch 11, **dadurch gekennzeichnet, dass** in der ersten Verbindungsleitung (33) eine erste Stromrichterdiode (41) in Durchlassrichtung von dem Wechselrichter (9) zu dem ersten Brückenzweig (31) angeordnet ist und in der zweiten Verbindungsleitung (34) eine zweite Stromrichterdiode (44) in Durchlassrichtung von dem Wechselrichter (9) zu einem Verbindungspunkt zwischen dem zweiten Brückenzweig (32) und dem Speicherzweig (54) oder ein ansteuerbarer Schalter angeordnet ist.

13. Energieerzeugungsanlage nach einem der Ansprüche 11 oder 12, **dadurch gekennzeichnet, dass** eine Koppelleitung (57) vorgesehen ist, die den Wechselrichter (9) mit einem Verbindungspunkt zwischen dem Speicherzweig (54) und der vierten Verbindungsleitung (43) koppelt und einen ansteuerbaren Schalter (58) zur bedarfsweisen Unterbrechung des Stromflusses in der Koppelleitung (57) enthält, und dass in der vierten Verbindungsleitung (43) zwischen dem zweiten und dem vierten Schalter (37, 49) ein ansteuerbarer Schalter (46) angeordnet ist, um eine leitende Verbindung zwischen diesen wahlweise herzustellen oder zu öffnen.

14. Energieerzeugungsanlage nach einem der Ansprüche 11 bis 13, **dadurch gekennzeichnet, dass** in dem Speicherzweig (54) ein Unterbrecher (56) vorgesehen ist, um einen Pol (26) der Speichereinrichtung (19) wahlweise von der vierten Verbindungsleitung (43) zu trennen.

15. Energieerzeugungsanlage nach einem der vorhergehenden Ansprüche, **dadurch gekennzeichnet, dass** ferner ein Mittel (59, 61) vorgesehen sind, die es ermöglichen, den DC/DC-Wandler (17, 17') wahlweise parallel an den Generator (3) anzuschließen.

16. Energieerzeugungsanlage nach einem der vorhergehenden Ansprüche, **dadurch gekennzeichnet, dass** eine Steuereinrichtung (28) vorgesehen ist, die zur Ansteuerung des DC/DC-Wandlers (17, 17') und der Speichereinrichtung (19) zugeordneter Umpolmittel (18) in Abhängigkeit von der durch den Generator (3) gelieferten Gleichspannungsleistung und der momentanen Leistung der Speichereinrichtung (19) eingerichtet ist.
